# EUROPEAN PATENT APPLICATION

(11) **EP 2 071 734 A2**
(43) Date of publication of application: **17.06.2009**
(21) Application number: 08021458.8
(22) Date of filing: 10.12.2008
(51) Int. Cl.: H04B 5/02

(54) **Communication apparatus**

(30) Priority: 11.12.2007 JP 2007319567
(71) Applicant: Sony Corporation, Tokyo 108-0075 (JP)
(72) Inventor: Goto, Tetsuro, Tokyo, 108-0075 (JP); Fukami, Tadashi, Tokyo, 108-0075 (JP); Endo, Akira, Tokyo, 108-0075 (JP)
(74) Representative: Müller - Hoffmann & Partner

(57) **Abstract**

Disclosed herein is a communication apparatus that performs short-range wireless communication in a contactless manner. The communication apparatus includes: a large antenna; a first wireless processing section configured to perform data communication via electromagnetic induction-type using the large antenna; a small antenna placed inside the large antenna; and a second wireless processing section configured to perform data communication using the small antenna.

## Description

### CROSS REFERENCES TO RELATED APPLICATIONS

The present invention contains subject matter related to Japanese Patent Application JP 2007-319567, filed in the Japan Patent Office on December 11, 2007, the entire contents of which being incorporated herein by reference.

### BACKGROUND OF THE INVENTION

### 1. Field of the Invention

The present invention relates to a communication apparatus that performs short-range wireless communication in a contactless manner. In particular, the present invention relates to a contactless communication apparatus such as a communication terminal (a transponder) that does not have its own source of radio waves and which transmits data to an apparatus (a reader/writer), i.e., a communication partner, in a wireless manner.

In more detail, the present invention relates to a communication apparatus that performs contactless communication via electromagnetic induction, using a primary coil in the reader/writer and a secondary coil in the transponder. In particular, the present invention relates to a communication apparatus that has perfect upward compatibility with already established NFC communication systems.

### 2. Description of the Related Art

As a communication system in which a communication terminal that does not have its own source of radio waves transmits data to a communication-partner device in a wireless manner, a contactless communication system called radio frequency identification (RFID) is known. The RFID is also referred to as "ID system," "data carrier system," and so on, but the name commonly used worldwide is "RFID system," i.e., "RFID" for short.

The RFID system is applied to a large number of contactless IC cards. An IC card system is composed of an integrated circuit (IC) card as a transponder and a device (hereinafter referred to as a "reader/writer") that reads information from the IC card or writes information to the IC card. The IC card system provides great convenience because the IC card and the reader/writer therein exchange the information therebetween in a contactless manner. Thus, the IC card system has been broadening its range of applications. For example, the IC card system has been replacing traditional magnetic cards as commuter passes, identification cards, and so on. Also, the IC card system has been finding wider applications in distribution systems and so on.

Examples of contactless communication methods as used in the RFID systems include electrostatic coupling, electromagnetic induction, and microwave communication. An RFID system using the electromagnetic induction is composed of a primary coil in the reader/writer and a secondary coil in the card (or the transponder), and these two coils are magnetically coupled to carry out data communication via the coils. Specifically, the reader/writer transmits data by performing amplitude modulation on a magnetic field generated by the primary coil, whereas the transponder demodulates it. The transponder is capable of transmitting data to the reader/writer by performing modulation, such as the amplitude modulation, through load switching (LS) in the secondary coil.

The coil in each of the transponder and the reader/writer operates as an LC resonant circuit. In general, a range of communication between the transponder and the reader/writer can be set appropriately by adjusting a resonance frequency of the coils to a frequency of a carrier wave used for the communication and allowing them to resonate with each other. Note that the coil in each of the transponder and the reader/writer will be hereinafter referred to also as an "antenna" as appropriate.

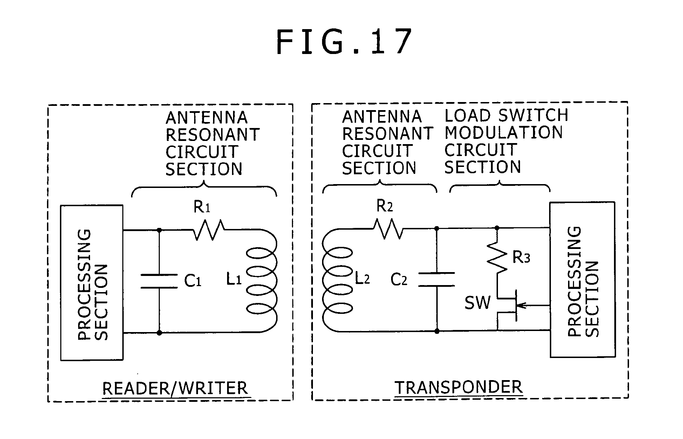

FIG. 17 illustrates an exemplary structure of a contactless communication system using the electromagnetic induction as composed of the transponder and the reader/writer. Antenna resonant circuit sections provided in both the transponder and the reader/writer are electromagnetically coupled with each other to exchange an information signal therebetween. The antenna resonant circuit section of the reader/writer is composed of a resistor R₁, a capacitor C₁, and a coil L₁, and transmits the information signal generated by a processing section to the transponder. Also, the antenna resonant circuit section receives the information signal from the transponder, and supplies the received information signal to the processing section. Note that a resonance frequency specific to the antenna resonant circuit section is set to a predetermined value beforehand by capacitance of the capacitor C₁ and inductance of the coil L₁.

The antenna resonant circuit section of the transponder is composed of a resistor R₂, a capacitor C₂, and a coil L₂, and transmits the information signal generated by a processing section and modulated by a load switch modulation circuit section to the antenna of the reader/writer. Also, the antenna resonant circuit section receives the information signal from the reader/writer, and supplies the received information signal to the processing section. Note that a resonance frequency of the antenna resonant circuit section is set to a predetermined value beforehand by capacitance of the capacitor C₂ and inductance of the coil L₂.

As an RFID standard, near field communication (NFC) developed by Sony and Philips is known. The NFC was approved as an international standard in December 2003, as ISO/IEC IS 18092. The NFC is originally a communication standard used in Sony's "FeliCa" and Philips's "Mifare," which are widely used as contactless IC cards. The NFC uses a radio wave with a frequency of 13.56 MHz, and is capable of bidirectional communication with a very short communication range of approximately 10 cm. (The NFC specifies passive communication between different reader/writers, in addition to the communication between the card and the reader/writer. The NFC includes FeliCa, TypeA, and TypeB defined in ISO 14443. TypeA corresponds to Philips's Mifare. A card and a reader/writer as smart cards are standardized as ISO 7816.)

At present, the NFC is widely used for personal identification, electronic money payment, and so on. For example, an NFC communication apparatus has been proposed that has an active mode in addition to a passive mode (see Japanese Patent Laid-open No. 2005-168069, for example).

The following table shows transfer directions, and a transfer speed, a modulation scheme, a coding system, and so on for each communication mode as defined in the NFC Interface and Protocol-1 (IP-1) standard.

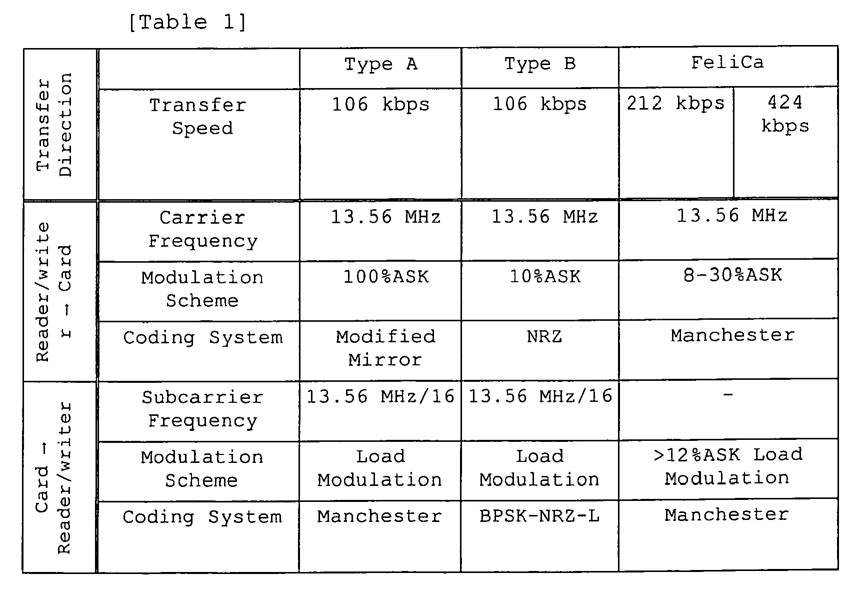

As shown in the above table, a maximum transfer speed as defined in the NFC IP-1 standard is as low as 424 kbps, and very low as compared to that of other general-purpose wireless communication standards (e.g., WiFi, Bluetooth, etc.). Thus, it is difficult to apply the NFC to high-capacity data communication for image data, audio data, video data, and so on. In addition, a maximum possible transfer speed that could be realized is as low as 848 kbps because of physical constraints such as that of the carrier frequency, and a future dramatic increase in the transfer speed cannot be expected.

As such, actual applications of current NFC communication are limited to electronic money, the personal identification (e.g., ID cards, tickets, etc.), assistance in establishing connection in the general-purpose wireless communication (handover), and transmission of a very small amount of data using a cheap tag (e.g., a smart poster, etc.).

### SUMMARY OF THE INVENTION

The present invention addresses the above-identified, and other problems associated with existing methods and apparatuses, and provides an excellent communication apparatus that is capable of performing data transfer suitably via contactless communication, as a transponder without its own source of radio waves or a reader/writer that transmits a carrier to the transponder.

Further, the present invention provides an excellent communication apparatus that is capable of performing contactless communication suitably via electromagnetic induction, using a primary coil in the reader/writer and a secondary coil in the transponder.

Still further, the present invention provides an excellent communication apparatus that is capable of performing high-speed data communication while maintaining perfect upward compatibility with already established NFC communication systems.

According to one embodiment of the present invention, there is provided a communication apparatus that performs short-range wireless communication in a contactless manner, the communication apparatus including: a large antenna; a first wireless processing section configured to perform data communication via electromagnetic induction-type using the large antenna; a small antenna placed inside the large antenna; and a second wireless processing section configured to perform data communication using the small antenna.

According to another embodiment of the present invention, there is provided a communication system including: an NFC-capable reader/writer having a large antenna; and an NFC-capable card, or an NFC-capable reader/writer that operates in a card mode, having a large antenna. The reader/writer and the card perform short-range wireless communication therebetween in a contactless manner. The reader/writer and the card each have a small antenna placed inside the large antenna, and use the pair of small antennas to perform multi-communication therebetween via another contactless communication system than NFC communication.

Note here that the term "system" as in "a communication system" above refers to a logical collection of a plurality of devices (or functional modules that fulfill specific functions), regardless of whether the plurality of devices or functional modules are contained in a single housing.

A contactless communication system called RFID is known, and the RFID has been broadening its range of applications. The NFC standard using a radio wave with a frequency of 13.56 MHz has been developed as a contactless communication system using electromagnetic induction. The NFC standard allows bidirectional communication with a very short communication range of approximately 10 cm.

However, the maximum transfer speed as defined in the NFC IP-1 standard is as low as 424 kbps, and very low as compared to that of other general-purpose wireless communication standards, and a future dramatic increase in the transfer speed cannot be expected.

In contrast, the communication apparatus according to an embodiment of the present invention includes, in addition to the large antenna and the first wireless processing section, which correspond to an NFC-capable reader/writer or transponder, the second wireless processing means and one or more small antennas placed inside the known large antenna. A pair(s) of individual small antennas is used to perform high-speed communication, whereby an improvement will be achieved in the transfer speed of a system as a whole.

The large antenna has perfect compatibility with the known NFC standard, and is capable of performing the known NFC communication when communication (hereinafter referred to as "multi-communication") between the small antennas is not used. On the other hand, the small antennas take charge of data communication alone. Thus, supply of power from the reader/writer to the card is also performed by the large antenna.

Thus, the communication apparatus according to the embodiment of the present invention has perfect upward compatibility with already established NFC communication systems, and does not require a significant change to a superior software program. The communication apparatus according to the embodiment of the present invention achieves a dramatic increase in the speed of the data communication as compared to current NFC communication.

Control for establishing the multi-communication as described above can be accomplished by software programs (e.g., so-called firmware) in CPUs contained in the card and the reader/writer. Alternatively, the above control may be implemented on a physical layer, using hardware (or a microprogram). In the latter case, the software programs are allowed to perform the data communication without regard to which communication is being performed on the physical layer (i.e., the known NFC communication or the multi-communication). In other words, the multi-communication can be accomplished without the need to make any change to the software programs used in the known NFC communication on the upper layer.

The multi-communication according to the present invention can also be applied to active-mode bidirectional communication as defined in the NFC IP-1 standard, if synchronous control over radio wave transmission and the operation of the plurality of small antennas is possible in the reader/writer.

The present invention provides an excellent communication apparatus that is capable of performing data transfer suitably via contactless communication, as a transponder without its own source of radio waves or a reader/writer that transmits a carrier to the transponder.

Also, the present invention provides an excellent communication apparatus that is capable of performing contactless communication suitably via electromagnetic induction, using a primary coil in the reader/writer and a secondary coil in the transponder.

A communication apparatus according to an embodiment of the present invention has one or more unified small antennas formed inside the large antenna, which is used as a known NFC reader/writer or transponder, and performs the multi-communication using a plurality of antennas. Thus, the communication apparatus maintains perfect upward compatibility with already established NFC communication systems, and does not require a significant change to a superior software program. In addition, the communication apparatus achieves a dramatic increase in the speed of the data communication as compared to the current NFC communication.

These and other features and advantages of the present invention will become more apparent from the following detailed description of preferred embodiments of the present invention when taken in conjunction with the accompanying drawings.

### BRIEF DESCRIPTION OF THE DRAWINGS

FIG. 1 illustrates a basic configuration of an NFC communication system;
FIG. 2 illustrates an antenna configuration of a common NFC-capable card;
FIG. 3 illustrates an exemplary antenna configuration of an NFC-capable card and reader/writer according to an embodiment of the present invention;
FIG. 4 illustrates multi-communication, i.e., the combination of communication between large antennas and communication between small antennas, as performed between the card and the reader/writer, with the antennas in the card opposed against those in the reader/writer;
FIG. 5 schematically illustrates the structure of a multi-communication system in which NFC communication is performed using a pair of large antennas while reflected wave transmission is performed using a pair of small antennas placed inside the large antennas;
FIG. 6 illustrates the structures of backscatter RF function sections of the card and the reader/writer;
FIG. 7 illustrates exemplary antenna configurations in NFC-capable cards equipped with a plurality of small antennas;
FIG. 8 illustrates an exemplary antenna configuration in an NFC-capable reader/writer, where a great number of small antennas are arranged in an array;
FIG. 9 illustrates a procedure for selecting a small antenna to be used for the communication, when the multi-communication is performed between the card and the reader/writer;
FIG. 10 illustrates a procedure for selecting an antenna to be used for the communication, in accordance with physical arrangements of the reader/writer and the card;
FIG. 11 is a flowchart illustrating a procedure performed by the reader/writer in order to establish the multi-communication between the reader/writer and the card;
FIG. 12 is a flowchart illustrating a procedure performed by the card in order to establish the multi-communication between the reader/writer and the card;
FIG. 13 is a flowchart illustrating a procedure performed by the reader/writer in order to establish the multi-communication between the reader/writer and the card;
FIG. 14 is a flowchart illustrating a procedure performed by the card in order to establish the multi-communication between the reader/writer and the card;
FIG. 15 illustrates exemplary antenna arrangements in the case where antenna configurations or characteristics are different between the reader/writer and the card;
FIG. 16 illustrates an exemplary manner in which antennas in different reader/writers are opposed to one another when the multi-communication is performed between the reader/writers; and
FIG. 17 illustrates an exemplary structure of a contactless communication system using electromagnetic induction as composed of the transponder and the reader/writer.

### DETAILED DESCRIPTION OF THE PREFERRED EMBODIMENTS

Hereinafter, preferred embodiments of the present invention will be described in detail with reference to the accompanying drawings.

The NFC standard was established as an RFID communication standard for the 13.56 MHz band, and is now widely used for personal identification, electronic money payment, and so on, using RFID cards. In the NFC IP-1 standard, transfer speeds, modulation schemes, and coding systems are defined depending on transfer direction and communication mode (see Table 1), but a maximum transfer speed is 424 Kbps of Felica, which is very low compared to that of other wireless communication standards (e.g., Bluetooth communication, IEEE 802.11, etc.).

On the other hand, NFC technology has several advantages as follows.
(1) The NFC technology uses a contactless interface, which is allowed great flexibility in shape, whose contact point is free from abrasion or deterioration, and which allows countermeasures against dust accumulation, water splashing, and so on at an interface port.
(2) A transponder, such as a card, is of the passive type, and it therefore does not need to be equipped with its own power supply.
(3) It is possible to provide electrical isolation between a reader/writer and the transponder.
(4) A maximum possible distance that a signal can cover is as short as 10 cm, and this physical characteristic ensures great security.

The above characteristics are very attractive when employing the card as the transponder for storage purposes (e.g., when using the card in a manner similar to that in which a USB memory is used), or for high-capacity data communication between portable devices, such as when exchanging image data, audio data, video data, or the like between the portable devices. Thus, there is an increasing desire for improvement in transfer speed of the NFC technology.

Communication apparatuses according to one embodiment of the present invention correspond to an NFC-capable reader/writer and transponder, each of which has a large antenna used for existing NFC communication and is provided with a unified array of one or more small antennas inside the large antenna. A pair(s) of individual small antennas communicate with each other at a high speed to improve a transfer speed of a system as a whole. Therefore, the communication apparatuses according to this embodiment maintain perfect upward compatibility with already established NFC communication systems, and do not require a significant change to a superior software program. In addition, the communication apparatuses according to this embodiment achieve a dramatic increase in speed of the data communication as compared to that of current NFC communication.

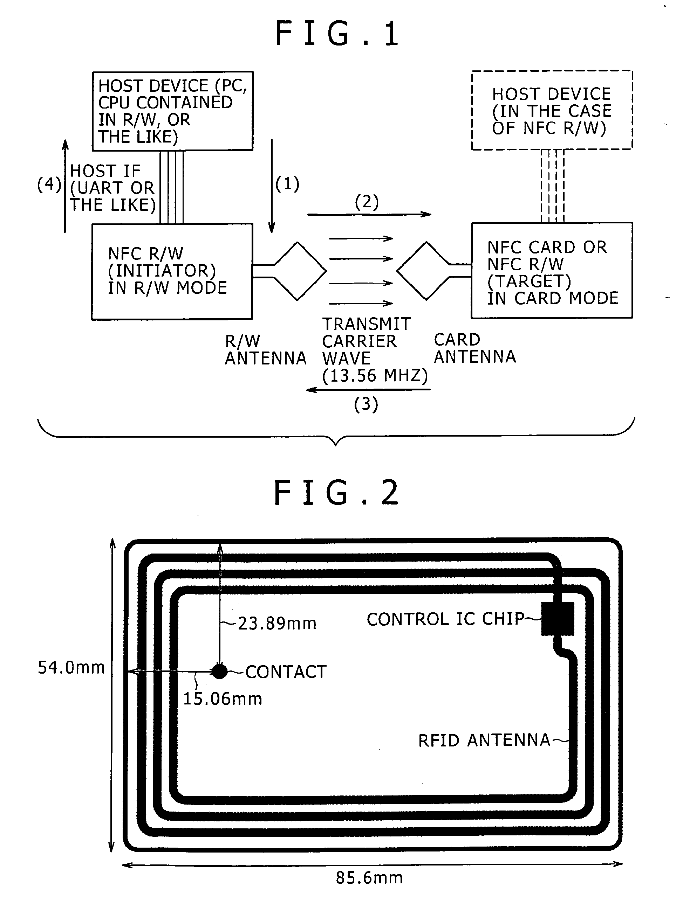

The NFC communication system allows an NFC reader/writer and an NFC card to communicate with each other, or passive NFC reader/writers to communicate with each other. FIG. 1 illustrates a basic configuration of the NFC communication system. The NFC communication system is composed of an initiator that initiates communication and a target to which the communication is directed.

Specifically, the initiator is an NFC-capable reader/writer (R/W) that operates in a reader/writer mode. The reader/writer as the initiator is connected to a host device via a host interface such as a universal asynchronous receiver-transmitter (UART). The host device corresponds to a personal computer (PC), a central processing unit (CPU) contained in the reader/writer, or the like.

On the other hand, the target is a transponder such as an NFC-capable card, or an NFC-capable reader/writer that operates in a card mode (hereinafter, the target will also be referred to simply as a "card," which encompasses all of them). The card may function on a standalone basis or be connected to a host device.

Upon receipt of a communication start command from the host device (as indicated by (1) in FIG. 1), the reader/writer connected to the host device first transmits a carrier wave. Thereafter, the NFC-capable reader/writer transmits a response request signal in a manner defined in the standard (i.e., using a specified carrier frequency, a specified data modulation rate, and specified data contents) in order to check whether any NFC-capable card (or any NFC-capable reader/writer that operates in the card mode) exists within an area covered by the communication ability of the NFC-capable reader/writer (as indicated by (2) in FIG. 1).

On the other hand, the card is first supplied with power by an induced electromotive force of the carrier transmitted by the reader/writer so as to be activated and become capable of reception. Thereafter, the card receives the response request signal transmitted from the reader/writer. If the received response request signal matches the type of the card, the card transmits a response signal including identification information (i.e., a card ID) of its own in a manner defined in the standard (i.e., using a specified data modulation rate, specified response timing, and specified data contents), by performing load modulation on the carrier transmitted from the reader/writer (as indicated by (3) in FIG. 1).

The reader/writer receives the response signal from the card, and then transfers information about the response signal to the host device (as indicated by (4) in FIG. 1). The host device recognizes the number of cards that exist in the area covered by the communication ability of the reader/writer, and the identification information of each of such cards, and proceeds to a phase of communication with a particular card in accordance with an operation program (firmware). Thus, communication between the reader/writer and the card (or communication between the passive NFC-capable reader/writers) is established. After the communication is established, the reader/writer as the initiator continues to transmit the carrier wave constantly, thereby sending necessary power to the card as the target, until end of the required communication.

At the time of data communication, as at the time of the above-described response request operation, the reader/writer performs intensity modulation on the carrier wave to transmit data to the card, whereas the card performs the load modulation on the unmodulated carrier to transmit data to the reader/writer. Note that the coding system depends on the communication mode. For details, see Table 1.

FIG. 2 illustrates an antenna configuration of a common NFC-capable card. The antenna configuration as illustrated in FIG. 2 is used in FeliCa, RC-S860, and so on.

A rectangular antenna coil is arranged along edges of the card, which has the size of a common IC card, i.e., 85.6 mm by 54.0 mm, as defined in ISO/IEC 7816-2, JIS 6301-2, and so on, in order to secure as much power as possible.

Note that ISO 14443 does not specify the configuration of the antenna coil or the number of turns of the coil, but recommends that the antenna coil be arranged so as to surround a contact of a contact IC card as defined in the ISO/IEC 7816-2 standard.

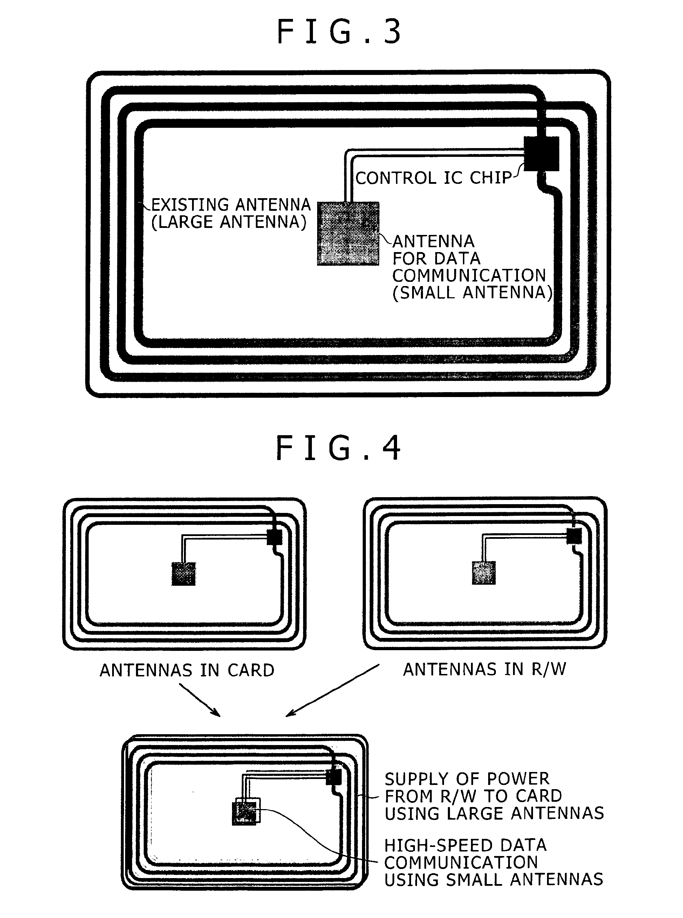

FIG. 3 illustrates an exemplary antenna configuration of the NFC-capable card and reader/writer according to an embodiment of the present invention. A small-sized antenna (hereinafter referred to as a "small antenna") is placed in the middle of an existing large-sized antenna (hereinafter referred to as a "large antenna"), and connected to a control IC chip.

The large antenna maintains perfect compatibility with the known NFC standard, and is capable of performing known NFC communication when the communication between the small antennas (hereinafter referred to as "multi-communication") is not used. Thus, the large antenna is also used to supply the power from the reader/writer to the card.

On the other hand, the small antenna is used only for the data communication. Physical configurations, including that of a wire connecting the small antenna to the control IC chip, the frequency of the carrier wave, output of the carrier from the reader/writer, and so on are adjusted properly in order not to cause mutual interference between the communication between the small antennas and the communication between the large antennas, or interfere with the supply of the power from the reader/writer to the card using the large antenna. The small antenna has a capability to perform the data communication independently of the large antenna.

FIG. 4 illustrates the multi-communication, i.e., the combination of the communication between the large antennas and the communication between the small antennas, as performed between the card and the reader/writer, with the antennas in the card opposed against those in the reader/writer.

In the reader/writer, the small antenna, as well as the large antenna, transmits the carrier wave, and modulates the carrier wave to send a signal to the card. On the other hand, the card sends a response signal to the reader/writer without using its own power. Thus, even when performing the data communication using the pair of small antennas, the card does not need to be equipped with its own power supply, as an existing NFC-capable card is not.

Note here that the communication between the small antennas is not limited to use of the known NFC standard using the 13.56 MHz band, and that another wireless communication technology, using a different carrier frequency band or a different communication mode, or having different coverage, may be applied to the communication between the small antennas, as long as neither the power supply nor the NFC communication using the large antennas is disturbed.

As an exemplary wireless communication technology applied to the communication between the small antennas, the present inventors propose an RFID system using microwave communication. According to this communication system, the transponder, such as the card, is equipped with a reflector for transmitting data via a reflected wave obtained by modulating the unmodulated carrier, whereas the reader/writer is equipped with a reflected wave reader for reading data from the modulated reflected wave signal transmitted from the reflector. If the unmodulated carrier is sent from the reflected wave reader to the reflector, the reflector performs reflected wave transmission, also called "backscatter," by modulating the reflected wave based on an operation of changing antenna load impedance or the like to superimpose transmission data upon the reflected wave.

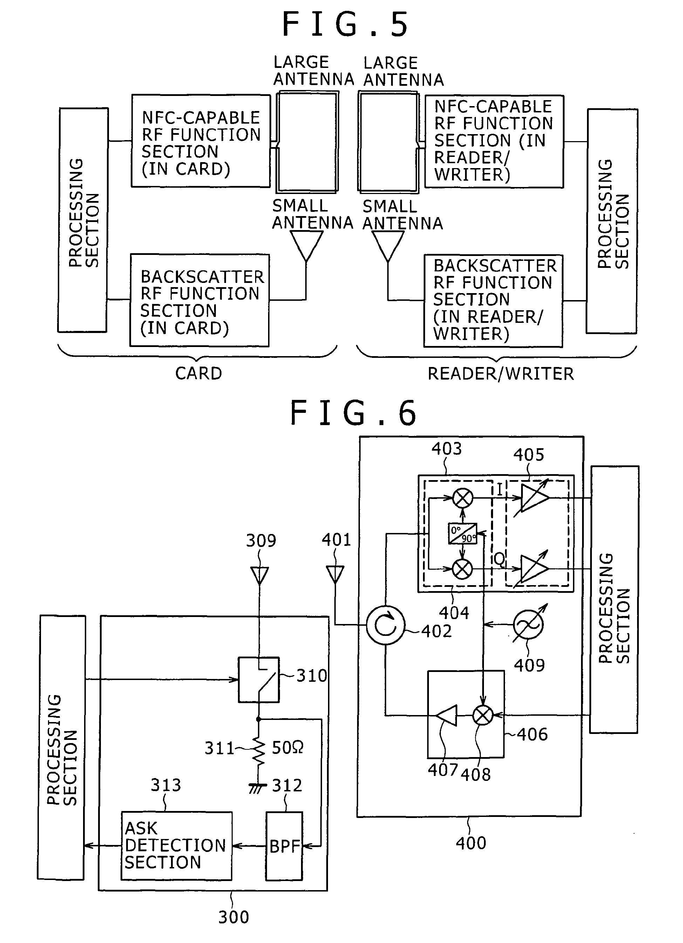

FIG. 5 schematically illustrates the structure of a multi-communication system in which the NFC communication is performed using a pair of large antennas while the reflected wave transmission is performed using a pair of small antennas placed inside the large antennas. As shown in FIG. 5, the card includes an NFC-capable large antenna, an NFC-capable RF function section, a small antenna, a backscatter RF function section, and a processing section, which corresponds to a superior protocol. On the other hand, the reader/writer includes an NFC-capable large antenna, an NFC-capable RF function section, a small antenna, a backscatter RF function section, and a processing section, which corresponds to a superior protocol.

The structures of the NFC-capable RF function sections of the card and the reader/writer are the same as those illustrated in FIG. 17. Therefore, descriptions thereof are omitted here.

FIG. 6 illustrates the structures of the backscatter RF function sections of the card and the reader/writer. In the present embodiment, the 2.4 GHz band is used as frequencies of radio waves.

A backscatter RF function section 300 of the card includes an antenna 309, an antenna switch 310, an antenna load 311, a band-pass filter 312, and an ASK detection section 313.

When the reflected wave transmission is performed, an on/off operation of the antenna switch 310, which is connected to the antenna 309, is performed in accordance with a bit image of transmission data supplied from the processing section. For example, the antenna switch 310 is turned on when data represents 1 and turned off when data represents 0. The antenna switch 310 is formed by a gallium arsenide IC, for example, and power consumption at the time of the on/off operation is less than tens of microwatts.

As shown in FIG. 6, when the antenna switch 310 is in an ON position, the antenna 309 is terminated with the antenna load 311 of 50 Ω, whereas when the antenna switch 310 is in an OFF position, the antenna 309 is open. According to this operation, in relation to a radio wave transmitted from a destination of the transmission data, the antenna 309 is terminated when the antenna switch 310 is in the ON position while the antenna 309 causes a reflection when the antenna switch 310 is in the OFF position. Accordingly, the reader/writer is able to read the data by detecting reflection of the transmitted radio wave. This reflected wave signal is equivalent to an ASK modulated wave. Note, however, that PSK modulation and FSK modulation are also applicable.

The band-pass filter (BPF) 312 and the ASK detection section 313 are used at a time when an acknowledgement signal subjected to ASK modulation has been received from the reader/writer, for example.

On the other hand, a backscatter RF function section 400 of the reader/writer includes an antenna 401 using the 2.4 GHz band, a circulator 402, a reception section 403, a transmission section 406, and a frequency synthesizer 409. The reception section 403 includes a quadrature detection section 404 and an AGC amplifier 405. The transmission section 406 includes a mixer 408 and a power amplifier 407.

When the unmodulated carrier is transmitted, a certain direct-current voltage is applied to the mixer 408. A frequency of the unmodulated carrier to be transmitted is determined by a frequency of the frequency synthesizer controlled by a communication control section (not shown). The 2.4 GHz band is used in the present embodiment. The unmodulated carrier outputted from the mixer 408 is amplified by the power amplifier 407 to a predetermined level, and then outputted by the antenna 401 via the circulator 402.

The reflected wave signal transmitted from the backscatter RF function section 300 of the card has the same frequency as the unmodulated carrier. This reflected wave signal is received by the antenna 401, and inputted to the reception section 403 via the circulator 402. The same local frequency as used for the transmission is inputted to the quadrature detection section 404, and therefore, the ASK modulated wave as transmitted from the image transmission apparatus 300 appears as an output from the quadrature detection section 404. However, because the signal received differs from a local signal in phase, modulated signals corresponding to a phase difference appear in an I-axis signal and a Q-axis signal. Gain is controlled to an optimum value in the AGC amplifier 405, and a signal outputted from the AGC amplifier 405 is supplied to the processing section. The processing section demodulates the I-axis and Q-axis signals to obtain digital data, and the proper data is transferred to the processing section.

While frequencies from several megahertz to hundreds of megahertz (e.g., 13.56 MHz) are used in the NFC communication system, the reflected wave transmission system as illustrated in FIG. 6 uses the 2.4 GHz band (microwaves) called an industrial, scientific and medical (ISM) band, which is a high-frequency band, for example, to carry out high-speed data transmission of the order of Mbps. Thus, a dramatic improvement in the transfer speed of the NFC communication can be achieved by performing the multi-communication using the small antennas while performing the NFC communication using the pair of large antennas.

The reflected wave transmission system is described in Japanese Patent Laid-open Nos. 2005-136666, 2005-136943, 2005-323267, and so on, which have been transferred to the present assignee, for example.

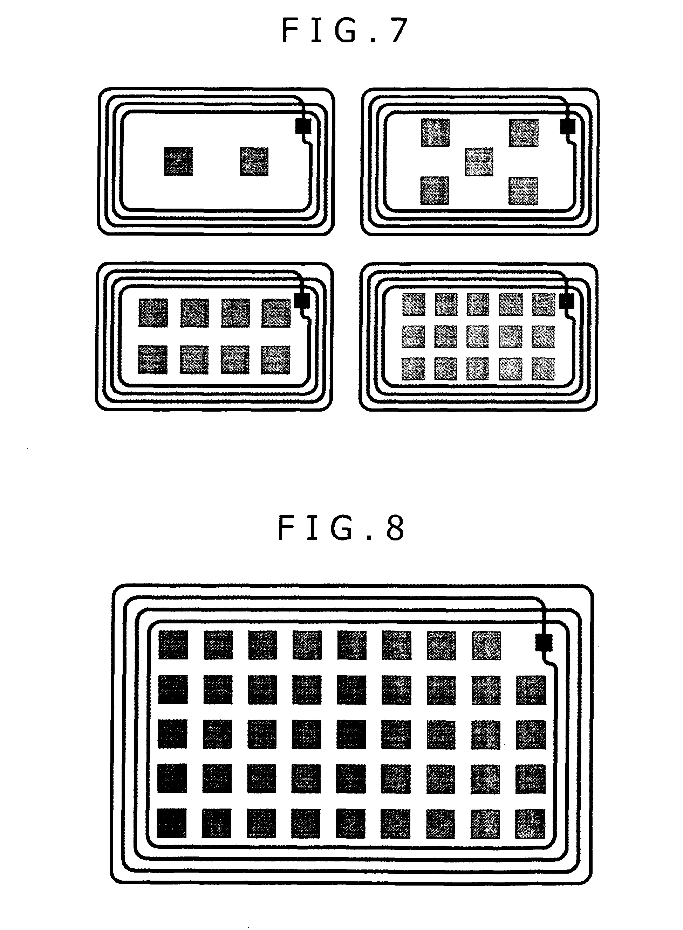

A plurality of small antennas may be placed inside the large antenna, as long as each of the small antennas is allowed to perform communication independently, without interfering with the communication of any other small antenna, and does not disturb the NFC communication or the power supply by the large antenna. FIG. 7 illustrates exemplary antenna configurations in NFC-capable cards equipped with a plurality of small antennas.

Regarding the antennas in the reader/writer, a great number of small antennas may be arranged in an array in the case where a sufficiently wide area can be secured for the antennas. FIG. 8 illustrates an exemplary antenna configuration in an NFC-capable reader/writer, where a great number of small antennas are arranged in an array. In this case, the reader/writer and the card are equipped with a section for distributing data to be communicated appropriately among the small antennas so that each of the small antennas will transmit a separate portion of the data, or a section for integrating data received by each of the small antennas into one unit appropriately, and each pair of small antennas performs independent communication in parallel so as to improve the transfer speed of the multi-communication.

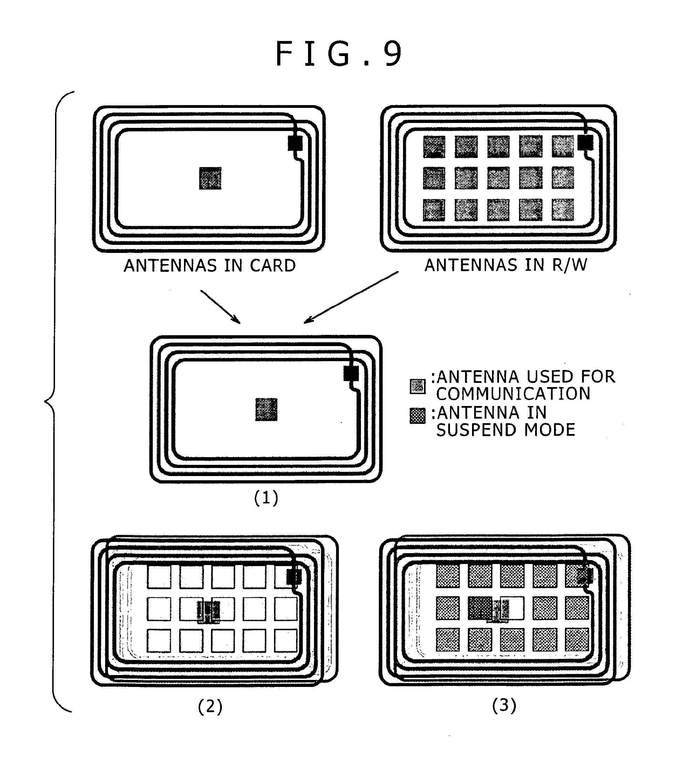

FIG. 9 illustrates a procedure for selecting a small antenna to be used for the communication, when the multi-communication is performed between the card and the reader/writer.

The reader/writer and the card are equipped with a section for, before starting the multi-communication, determining whether each of the small antennas is capable of communicating with the other party individually. The reader/writer and the card allow any small antenna that has been determined to be incapable of communicating with the other party to enter a suspend mode, and carry out the multi-communication using only a pair(s) of antennas that are capable of communicating with each other (see (1) in FIG. 9).

At this time, if more than one small antenna in the reader/writer or the card is capable of communicating with the same small antenna in the other party (see (2) in FIG. 9), one of the multiple small antennas that is capable of communicating most excellently is selected, and the rest of the multiple small antennas is caused to enter the suspend mode (see (3) in FIG. 9).

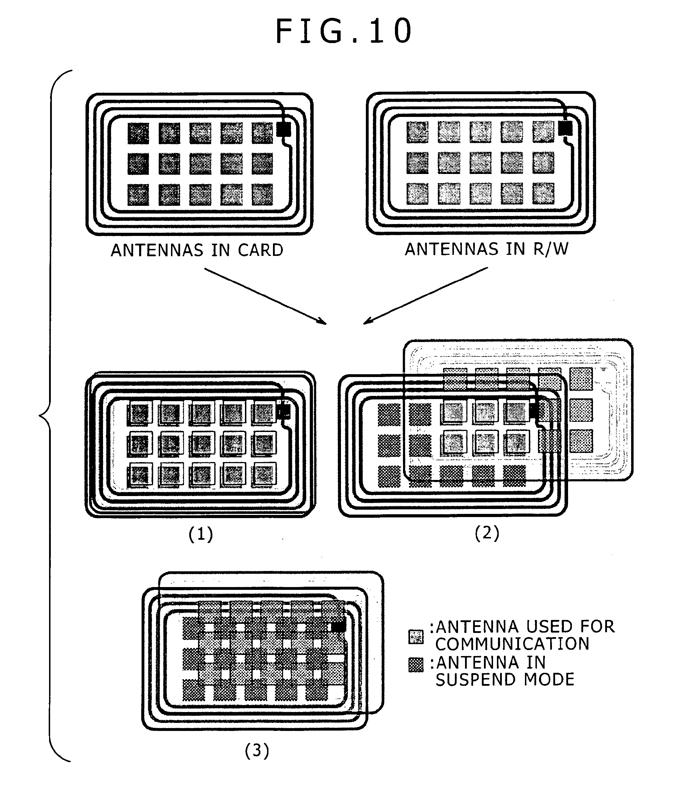

FIG. 10 illustrates a procedure for selecting an antenna to be used for the communication, in accordance with physical arrangements of the reader/writer and the card.

When the physical arrangements of the reader/writer and the card are ideal with the help of a card holder attached to the reader/writer, for example, the multi-communication is performed at a maximum possible transfer speed allowed by the pair of the reader/writer and the card (see (1) in FIG. 10).

Meanwhile, when the physical arrangements of the reader/writer and the card are not favorable, such as when a user holds the card by hand or places the card close to the reader/writer, the multi-communication is performed at a maximum transfer speed allowed in this situation (see (2) in FIG. 10).

Meanwhile, when no pairs of small antennas are capable of communication, the NFC communication is performed in the existing manner using the large antennas (see (3) in FIG. 10).

During this procedure for selecting the antenna(s) to be used for the communication, the power is constantly supplied from the reader/writer to the card using the large antennas, regardless of whether the data communication is performed using the large antennas.

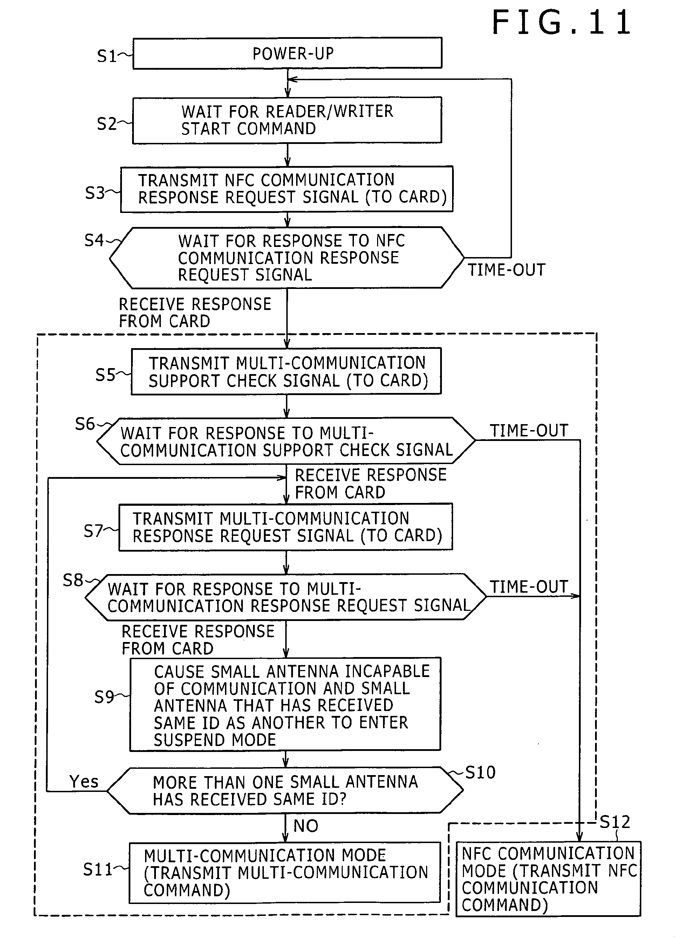

FIG. 11 is a flowchart illustrating a procedure performed by the reader/writer in order to establish the communication between the reader/writer and the card. Notice that steps enclosed by a dotted line in this figure correspond to a novel procedure for establishing the multi-communication.

After power-up (step S1), the reader/writer waits until receipt of a reader/writer start command from the host, to which the reader/writer is connected via the UART or the like (step S2).

Upon receipt of the reader/writer start command from the host, the reader/writer uses the large antenna to transmit the response request signal to any NFC-capable card within its coverage (step S3), and waits for receipt of a response from any NFC-capable card (step S4). If time-out occurs while the reader/writer is waiting for a response from any card, control returns to step S2, and the reader/writer waits again until receipt of the reader/writer start command from the host.

Meanwhile, if the reader/writer receives, from any NFC-capable card, a response to the response request signal, the reader/writer uses the large antenna to transmit, to that card, a "multi-communication support check signal" to check whether that card is capable of high-speed communication using the small antenna, i.e., whether that card supports the multi-communication (step S5). Then, the reader/writer waits for a response from the card (step S6).

Here, if time-out occurs while the reader/writer is waiting for a response from the card, the reader/writer, determining not to perform the multi-communication with the card, enters an NFC communication mode that involves use of only the large antenna (step S12), and transmits an NFC communication command to the card via the large antenna.

Meanwhile, if the reader/writer receives, from the card, a response to the multi-communication support check signal, the reader/writer uses the small antennas to transmit "multi-communication response request signals" to the card at a time (step S7), and waits for a response from the card (step S8). The multi-communication response request signal transmitted from each of the small antennas contains an ID number that indicates the small antenna from which it is transmitted.

If time-out occurs while the reader/writer is waiting for a response from the card, the reader/writer, determining not to perform the multi-communication, enters the NFC communication mode that involves use of only the large antenna (step S12), and transmits the NFC communication command to the card via the large antenna.

The response to the multi-communication response request signal contains an ID number that indicates a small antenna in the card from which it is transmitted (details thereof will be described later). If any of the small antennas in the reader/writer receives a multi-communication response signal (i.e., a response to the multi-communication response request signal) from the card, the reader/writer causes all small antennas that have not received the multi-communication response signal to enter the suspend mode (step S9). In addition, the reader/writer compares the ID numbers contained in the response signals received by the small antennas with one another to determine whether more than one small antenna has received the same ID number as contained in the multi-communication response signal (step S10). If it is determined that more than one small antenna has received the same ID number as contained in the multi-communication response signal, the reader/writer selects one of the multiple small antennas that is capable of communicating most excellently, and causes the rest of the multiple small antennas to enter the suspend mode. Then, control returns to step S7, and the reader/writer transmits the multi-communication response request signal via each of the remaining small antennas at a time again. The reader/writer repeats the above-described multi-communication response request operation several times in relation to the card, to establish pairs of small antennas, one in the reader/writer and the other in the card, that are capable of communicating with each other in a one-to-one manner without overlapping.

Then, when it has been determined that no two multi-communication response signals received by the small antennas contain the same ID number (i.e., when it has been determined that more than one small antenna has not received the same ID number as contained in the multi-communication response signal), the reader/writer shifts to a multi-communication mode in which the reader/writer performs the high-speed communication using the small antennas in addition to the NFC communication using the large antennas. In this case, the reader/writer transmits a multi-communication command to the card via each of the small antennas that are capable of communicating (step S11).

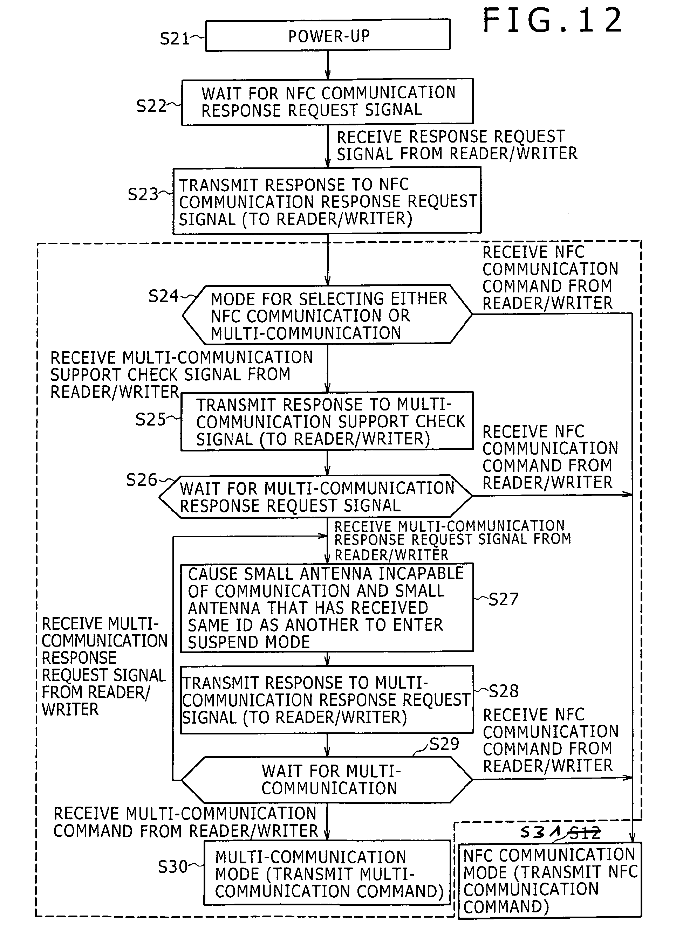

FIG. 12 is a flowchart illustrating a procedure performed by the card in order to establish the communication between the reader/writer and the card. Note that steps enclosed by a dotted line in this figure correspond to a novel procedure for establishing the multi-communication.

After power-up (step S21), the card waits until receipt of the response request signal from any NFC-capable reader/writer within its coverage (step S22). Then, in response to receipt of the response request signal from any reader/writer, the card transmits a response to the response request signal via the large antenna (step S23). Then, the card shifts to a selection mode for determining whether to perform the NFC communication with the reader/writer or to perform the multi-communication with the reader/writer, which involves simultaneous performance of the NFC communication and the high-speed communication using the small antennas (step S24). If time-out occurs while the card is in this selection mode, the card, determining not to perform the multi-communication, enters an NFC communication mode that involves use of only the large antenna (step S31).

Meanwhile, if the card receives the multi-communication support check signal from the reader/writer while in the selection mode, the card transmits, via the large antenna, a response to notify the reader/writer that the card supports the multi-communication (step S25). Then, the card waits for receipt of the multi-communication response request signal from the reader/writer (step S26). If time-out occurs while the card is waiting for receipt of the multi-communication response request signal from the reader/writer, the card, determining not to perform the multi-communication, enters the NFC communication mode that involves use of only the large antenna (step S31).

If the card receives the multi-communication response request signal from the reader/writer, the card transmits a response signal via the small antenna. At this time, the card causes all small antennas that have not received the multi-communication response request signal from the reader/writer to enter a suspend mode (step S27). In addition, the card compares the ID numbers contained in the response request signals received by the small antennas with one another to determine whether more than one small antenna has received the same ID number as contained in the multi-communication response request signal. If it is determined that no two small antennas have received the same ID number as contained in the multi-communication response request signal, the card transmits the response signal via each of all small antennas that have received the multi-communication response request signal at a time (step S28). Meanwhile, if it is determined that more than one small antenna has received the same ID number as contained in the multi-communication response request signal, the card selects one of the multiple small antennas that is capable of communicating most excellently, and, after causing the rest of the multiple small antennas to enter the suspend mode (step S27), transmits the response signal via each of the remaining small antennas at a time (step S28). The response signal transmitted via each of these small antennas contains the ID number that indicates the small antenna in the card from which the response signal is transmitted. Then, the card shifts to a mode for waiting for the multi-communication (step S29).

If time-out occurs while the card is in the mode for waiting for the multi-communication (or if the card receives the NFC communication command from the reader/writer), the card, determining not to perform the multi-communication, enters the NFC communication mode that involves use of only the large antenna (step S31).

Meanwhile, if the card receives the multi-communication command from the reader/writer while in the mode for waiting for the multi-communication, the card shifts to a multi-communication mode in which the card performs the high-speed communication using the small antennas in addition to the NFC communication using the large antennas (step S30).

The control in each of the procedures as illustrated in FIGS. 11 and 12 can be accomplished by software programs (e.g., so-called firmware) in CPUs contained in the card and the host device connected to the reader/writer via the UART. Alternatively, the above control may be implemented on a physical layer, using hardware (or a microprogram). In the latter case, the software programs are allowed to perform the data communication without regard to which communication is being performed on the physical layer (i.e., the existing NFC communication or the multi-communication). In other words, the multi-communication can be accomplished without the need to make any change to the software programs used in the existing NFC communication on the upper layer.

In the procedures as illustrated in FIGS. 11 and 12, the procedure of exchanging the multi-communication support check signal and the response to this signal between the reader/writer and the card is required for each of the reader/writer and the card to recognize whether or not the multi-communication is supported by the other party. Note, however, that the procedure for each of the reader/writer and the card to recognize whether the multi-communication is supported by the other party can be made simpler by storing information indicating whether or not the multi-communication is supported in an unused bit (RFU) within the response request signal and the response signal as used in the existing NFC communication.

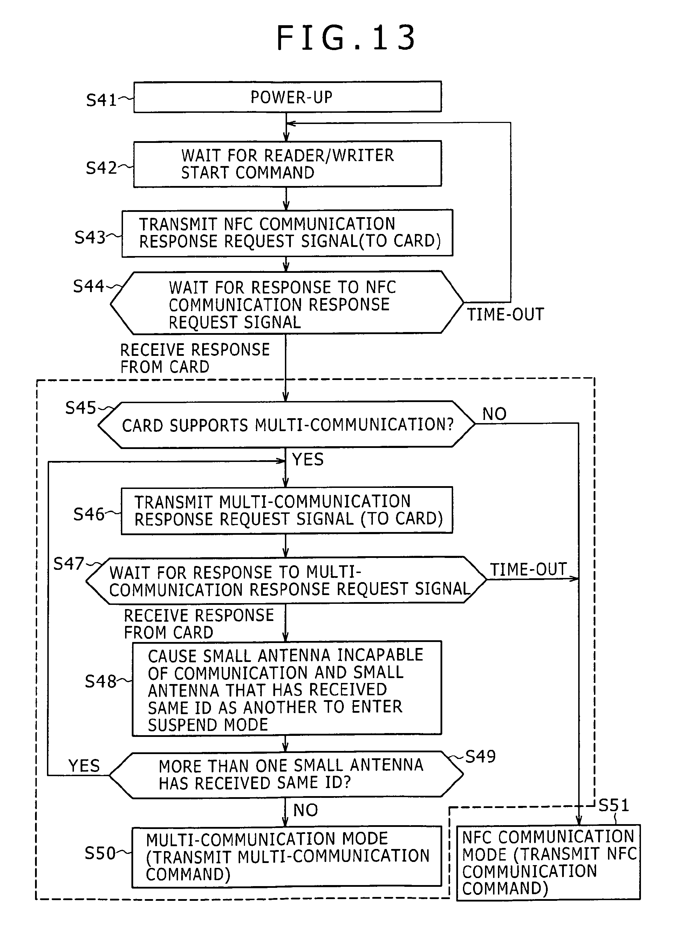

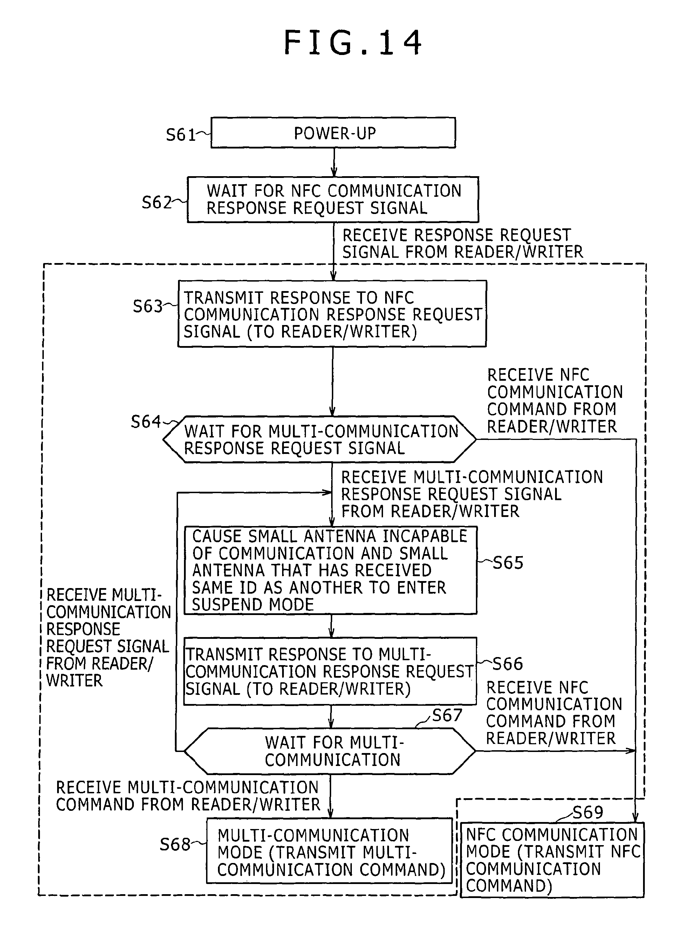

FIGS. 13 and 14 are flowcharts illustrating procedures performed by the reader/writer and the card, respectively, in order to establish the communication between the reader/writer and the card, in the case where the information indicating whether or not the multi-communication is supported is stored in the unused bit (RFU) in the response request signal and the response signal as used in the NFC communication. Notice that steps enclosed by a dotted line in these figures correspond to a novel procedure for establishing the multi-communication.

After power-up (step S41), the reader/writer waits until receipt of the reader/writer start command from the host, to which the reader/writer is connected via the UART or the like (step S42).

Upon receipt of the reader/writer start command from the host, the reader/writer uses the large antenna to transmit the response request signal to any NFC-capable card within its coverage (step S43), and waits for receipt of a response from any NFC-capable card (step S44). Information indicating that the reader/writer supports the multi-communication is stored in the unused bit (RFU) within the response request signal.

If time-out occurs while the reader/writer is waiting for a response from any card, control returns to step S42, and the reader/writer waits again until receipt of the reader/writer start command from the host. Meanwhile, if the reader/writer receives, from any NFC-capable card, a response to the response request signal, the reader/writer checks whether information indicating that the card supports the multi-communication is stored in an unused bit (RFU) within this response (step S45). Notice that the operation of transmitting the multi-communication support check signal is omitted in this procedure.

If it is not determined based on the unused bit (RFU) within the response received from the card that the card supports the multi-communication, the reader/writer, determining not to perform the multi-communication with the card, enters the NFC communication mode that involves use of only the large antenna (step S51), and transmits the NFC communication command to the card via the large antenna.

Meanwhile, if it is determined based on the unused bit (RFU) within the response received from the card that the card supports the multi-communication, the reader/writer uses the small antennas to transmit the "multi-communication response request signals" to the card at a time (step S46), and waits for a response from the card (step S47). The multi-communication response request signal transmitted from each of the small antennas contains the ID number that indicates the small antenna from which it is transmitted.

If time-out occurs while the reader/writer is waiting for a response from the card, the reader/writer, determining not to perform the multi-communication, enters the NFC communication mode that involves use of only the large antenna (step S51), and transmits the NFC communication command to the card via the large antenna.

The response to the multi-communication response request signal contains an ID number that indicates the small antenna in the card from which it is transmitted. If any of the small antennas in the reader/writer receives the multi-communication response signal from the card, the reader/writer causes all small antennas that have not received the multi-communication response signal to enter the suspend mode (step S48). In addition, the reader/writer compares the ID numbers contained in the response signals received by the small antennas with one another to determine whether more than one small antenna has received the same ID number as contained in the multi-communication response signal (step S49). If it is determined that more than one small antenna has received the same ID number as contained in the multi-communication response signal, the reader/writer selects one of the multiple small antennas that is capable of communicating most excellently, and causes the rest of the multiple small antennas to enter the suspend mode. Then, control returns to step S46, and the reader/writer transmits the multi-communication response request signal via each of the remaining small antennas at a time again. The reader/writer repeats the above-described multi-communication response request operation several times in relation to the card, to establish pairs of small antennas, one in the reader/writer and the other in the card, that are capable of communicating with each other in a one-to-one manner.

Then, when it has been determined that no two multi-communication response signals received by the small antennas contain the same ID number (i.e., when it has been determined that more than one small antenna has not received the same ID number as contained in the multi-communication response signal), the reader/writer shifts to the multi-communication mode in which the reader/writer performs the high-speed communication using the small antennas in addition to the NFC communication using the large antennas. In this case, the reader/writer transmits the multi-communication command to the card via each of the small antennas that are capable of communicating (step S50).

On the other hand, after power-up (step S61), the card waits until receipt of the response request signal from any NFC-capable reader/writer within its coverage (step S62). Then, if the card receives the response request signal from the reader/writer, the card recognizes that the information indicating that the reader/writer supports the multi-communication is stored in the unused bit (RFU) within the received signal, and then transmits a response to this signal via the large antenna (step S63), and waits for receipt of the multi-communication response request signal from this reader/writer (step S64). The information indicating that the card supports the multi-communication is stored in the unused bit (RFU) within the response to the response request signal. Notice that the selection mode for determining whether to perform the NFC communication with the reader/writer or to perform the multi-communication with the reader/writer is omitted in this procedure. Also notice that the process of transmitting the response to the multi-communication support check signal is omitted in this procedure.

If time-out occurs while the card is waiting for the receipt of the multi-communication response request signal from the reader/writer, the card, determining not to perform the multi-communication, enters the NFC communication mode that involves use of only the large antenna (step S69).

If the card receives the multi-communication response request signal from the reader/writer, the card transmits the response signal via the small antenna. At this time, the card causes all small antennas that have not received the multi-communication response request signal from the reader/writer to enter the suspend mode (step S65). In addition, the card compares the ID numbers contained in the response request signals received by the small antennas with one another to determine whether more than one small antenna has received the same ID number as contained in the multi-communication response request signal. If it is determined that no two small antennas have received the same ID number as contained in the multi-communication response request signal, the card transmits the response signal via each of all small antennas that have received the multi-communication response request signal at a time (step S66). Meanwhile, if it is determined that more than one small antenna has received the same ID number as contained in the multi-communication response request signal, the card selects one of the multiple small antennas that is capable of communicating most excellently, and, after causing the rest of the multiple small antennas to enter the suspend mode (step S65), transmits the response signal via each of the remaining small antennas at a time (step S66). The response signal transmitted via each of these small antennas contains the ID number that indicates the small antenna in the card from which the response signal is transmitted. Then, the card shifts to the mode for waiting for the multi-communication (step S67).

If time-out occurs while the card is in the mode for waiting for the multi-communication (or if the card receives the NFC communication command from the reader/writer), the card, determining not to perform the multi-communication, enters the NFC communication mode that involves use of only the large antenna (step S69).

Meanwhile, if the card receives the multi-communication command from the reader/writer while in the mode for waiting for the multi-communication, the card shifts to the multi-communication mode in which the card performs the high-speed communication using the small antennas in addition to the NFC communication using the large antennas (step S68).

At the time of the multi-communication mode, the large antennas are used to perform the NFC communication between the reader/writer and the card and supply the power from the reader/writer to the card, while the pair(s) of small antennas, which are placed inside the large antennas, are used to perform the data communication between the reader/writer and the card. The reflected wave transmission using the 2.4 GHz band, for example, may be applied to the data communication using the pair(s) of small antennas. In this case, the data communication using the pair(s) of small antennas can be performed at a high speed, without interfering with the NFC communication using the large antennas.

The present invention has been described in detail above with reference to the specific embodiments. However, it should be understood by those skilled in the art that various modifications, combinations, sub-combinations and alterations may occur depending on design requirements and other factors insofar as they are within the scope of the appended claims or the equivalents thereof.

The foregoing descriptions of the specific embodiments of the present invention have focused on contactless communication between the reader/writer and the card. Note, however, that this is not essential to the present invention. For example, the present invention is similarly applicable to passive-mode bidirectional communication between different reader/writers as defined in the NFC IP-1 standard.

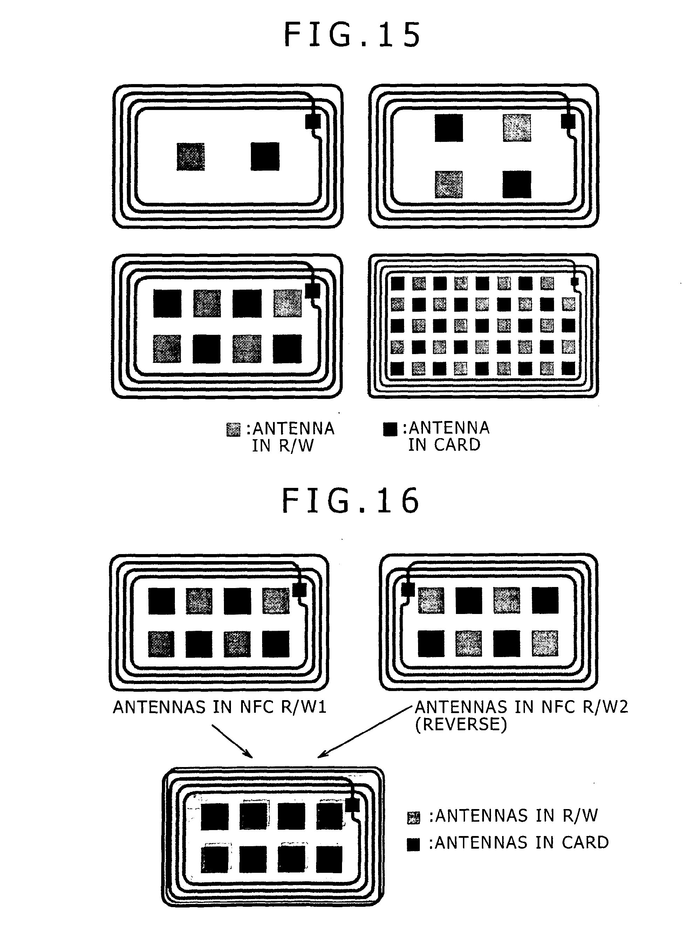

Note that in the case where the structures of the reader/writer and the card are asymmetrical (i.e., in the case where the antenna configurations or characteristics are different between the reader/writer and the card) as in the above-described communication technology using the reflected wave transmission in the communication via the small antennas, ingenuities are necessary regarding the arrangements of the antennas in the reader/writer and the card. FIG. 15 illustrates exemplary antenna arrangements in the case where the antenna configurations or characteristics are different between the reader/writer and the card.

Also note that in the case where the multi-communication is performed between different reader/writers, relative positions (orientations) of the reader/writers also need care. FIG. 16 illustrates an exemplary manner in which the antennas in the different reader/writers are opposed to one another when the multi-communication is performed between the reader/writers.

Also note that the multi-communication according to an embodiment of the present invention can also be applied to active-mode bidirectional communication as defined in the NFC IP-1 standard, if synchronous control over radio wave transmission and the operation of the plurality of small antennas is possible in the reader/writer.

A further embodiment provides a communication system, wherein said reader/writer or card whose small antenna is composed of the plurality of small antennas arranged in a unified array inside the large antenna determines whether each of the small antennas is capable of communicating with the other party individually before starting the multi-communication using the pair of small antennas, and allows any of the small antennas that has been determined to be incapable of communicating to enter a suspend mode, and performs the multi-communication using only a pair of antennas that are capable of communicating with each other.

A further embodiment provides a communication system, wherein said reader/writer or card whose small antenna is composed of the plurality of small antennas arranged in a unified array inside the large antenna, when more than one of the small antennas are overlapped and capable of communicating with the same small antenna in the other party, selects one of the more than one of the small antennas that is capable of communicating most excellently, and causes a rest of the more than one of the small antennas to enter the suspend mode.

## Claims

1. A communication apparatus that performs short-range wireless communication in a contactless manner, the communication apparatus comprising:
a large antenna;
first wireless processing means for performing data communication via electromagnetic induction-type using said large antenna;
a small antenna placed inside said large antenna; and
second wireless processing means for performing data communication using said small antenna.

2. The communication apparatus according to claim 1, wherein said first wireless processing means operates as either a card or a reader/writer in near field communication (NFC) using said large antenna, to perform the data communication with another communication apparatus that operates as a reader/writer or a card.

3. The communication apparatus according to claims 1 to 2, wherein said second wireless processing means operates as either a reflector for transmitting data via a reflected wave obtained by modulating an unmodulated carrier, or a reflected wave reader for reading data from a modulated reflected wave signal transmitted from the reflector, to perform reflected wave transmission using said small antenna.

4. The communication apparatus according to claims 1 to 3, wherein,
said large antenna is composed of a plurality of small antennas arranged in a unified array inside said large antenna, and
said second wireless processing means either distributes data to be communicated appropriately among the small antennas so that each of the small antennas will transmit a separate portion of the data, or integrates data received by each of the small antennas into one unit appropriately.

5. The communication apparatus according to claims 1 to 4, wherein, when said second wireless processing means is incapable of performing the data communication using said small antenna, said first wireless processing means performs the data communication using only said large antenna.

6. The communication apparatus according to claims 4 or 5, wherein said second wireless processing means has means for, before multi-communication using a pair of said small antennas is started, determining whether each of the small antennas is capable of communicating with another communication apparatus individually, and allows any of the small antennas that has been determined to be incapable of communicating to enter a suspend mode, and carries out the multi-communication using only a pair of antennas that are capable of communicating.

7. The communication apparatus according to claim 6, wherein, when more than one of the small antennas are overlapped and capable of communicating with the same small antenna in the other communication apparatus, said second wireless processing means selects one of the more than one of the small antennas that is capable of communicating most excellently, and causes a rest of the more than one of the small antennas to enter the suspend mode.

8. The communication apparatus according to claims 2 to 7, wherein,
said first wireless processing means uses said large antenna to check whether the other communication apparatus is capable of performing multi-communication using a small antenna, and
said second wireless processing means carries out the multi-communication using said small antenna, only when it has been determined that the other communication apparatus is capable of performing the multi-communication using the small antenna.

9. The communication apparatus according to claims 2 to 8, wherein when said first wireless processing means operates as the reader/writer, said first wireless processing means constantly supplies power to the other communication apparatus operating as a card using said large antenna, regardless of whether or not said first wireless processing means performs the data communication using said large antenna.

10. A communication system, comprising:
a near field communication (NFC) -capable reader/writer having a large antenna; and
an NFC-capable card, or an NFC-capable reader/writer that operates in a card mode, having a large antenna, wherein,
said reader/writer and said card perform short-range wireless communication therebetween in a contactless manner, and
said reader/writer and said card each have a small antenna placed inside the large antenna, and use the pair of small antennas to perform multi-communication therebetween via another contactless communication system than NFC communication.

11. The communication system according to claim 10, wherein,
said card includes a reflector for transmitting data via a reflected wave obtained by modulating an unmodulated carrier received by the small antenna,
said reader/writer includes a reflected wave reader for reading data from a modulated reflected wave signal received by the small antenna, and
said reader/writer and said card perform the multi-communication therebetween via reflected wave transmission using the pair of small antennas.

12. The communication system according to claims 10 to 11, wherein, before starting the multi-communication using the pair of small antennas, each of said reader/writer and said card checks, via the NFC communication using the pair of large antennas, whether the other party is capable of performing the multi-communication using the pair of small antennas, and carries out the multi-communication using the pair of small antennas only when it has been determined that said reader/writer and said card are capable of performing the multi-communication using the pair of small antennas.

13. The communication system according to claims 10 to 12, wherein, in at least one of said reader/writer and said card,
the small antenna is composed of a plurality of small antennas arranged in a unified array inside the large antenna, and data to be communicated is distributed appropriately among the small antennas so that each of the small antennas will transmit a separate portion of the data, or data received by each of the small antennas is integrated into one unit appropriately.

14. The communication system according to claims 10 to 13, wherein, when said reader/writer and said card are incapable of performing data communication using the pair of small antennas, said reader/writer and said card perform the data communication using only the pair of large antennas.

15. The communication system according to claims 10 to 14, wherein said reader/writer constantly supplies power to said card using the large antenna, regardless of whether or not said reader/writer performs data communication using the pair of large antennas.
